# EUROPEAN PATENT APPLICATION

(11) **EP 4 813 749 A1**
(43) Date of publication of application: **30.09.2026**
(21) Application number: 24893230.3
(22) Date of filing: 05.11.2024
(51) Int. Cl.: B60R 1/08

(54) **ANTI-GLARE METHOD AND APPARATUS FOR REARVIEW MIRROR, IN-VEHICLE REARVIEW MIRROR, AND VEHICLE**

(30) Priority: 23.11.2023 CN 202311576742
(71) Applicant: Great Wall Motor Company Limited, Baoding, Hebei 071000 (CN)
(72) Inventor: HAN, Xinchao, Baoding, Hebei 071000 (CN); JIN, Lu, Baoding, Hebei 071000 (CN); HAN, Guanglei, Baoding, Hebei 071000 (CN)
(74) Representative: Klunker IP Patentanwälte PartG mbB
(86) International application number: PCT/CN2024/129882
(87) International publication number: WO 2025/108072

(57) **Abstract**

The present application provides an anti-glare method and apparatus for a rearview mirror, an in-vehicle rearview mirror, and a vehicle. The method comprises: on the basis of a front light sensitivity value of an in-vehicle rearview mirror, determining a proportionality coefficient, the proportionality coefficient being negatively correlated with the front light sensitivity value; on the basis of a rear light sensitivity value and the front light sensitivity value of the in-vehicle rearview mirror, determining a light sensitivity coefficient; on the basis of the light sensitivity coefficient, the proportionality coefficient, and a preset precision multiple, determining a current light sensitivity multiple; on the basis of the current light sensitivity multiple, determining a target reflectivity of the in-vehicle rearview mirror; and, on the basis of the target reflectivity, adjusting the reflectivity of the in-vehicle rearview mirror. The front light sensitivity value is a light sensitivity value in a forward direction of a vehicle, and the rear light sensitivity value is a light sensitivity value in a rearward direction of the vehicle. By means of the technical solution of the present application, the reflectivity of an in-vehicle rearview mirror is adjusted in combination with environmental brightness, and the display effect of the in-vehicle rearview mirror is improved, thereby improving driving safety.

## Description

The present disclosure claims the priority to the Chinese patent application No. 202311576742.4, entitled "ANTI-GLARE METHOD AND APPARATUS FOR REARVIEW MIRROR, IN-VEHICLE REARVIEW MIRROR, AND VEHICLE", filed on November 23, 2023 with the China National Intellectual Property Administration, which is incorporated herein by reference in its entirety.

### TECHNICAL FIELD

The present disclosure relates to the technical field of automotive accessories, and in particular, to an anti-glare method and apparatus for a rearview mirror, an interior rearview mirror and a vehicle.

### BACKGROUND

In a traditional anti-glare method for a rearview mirror, a difference or a ratio of light intensities between the front and the rear of the rearview mirror is obtained through two light sensors located at the front and rear of the mirror, and then a reflectance of the rearview mirror is automatically adjusted.

However, in a low-light environment, this reflectance adjustment method can cause a significant change in the reflectance of the rearview mirror in response to even a small amount of light. This leads to a problem of erroneous reflectance adjustment of the rearview mirror, affecting the display effect of the rearview mirror and potentially even impacting driving safety.

### SUMMARY

In view of this, an objective of the present disclosure is to provide an anti-glare method and apparatus for a rearview mirror, an interior rearview mirror and a vehicle, to adjust a reflectance of an interior rearview mirror in conjunction with ambient brightness, thereby improving the display effect of the interior rearview mirror and enhancing driving safety.

Based on the above objective, the present disclosure provides an anti-glare method for a rearview mirror, including:
determining a proportionality coefficient based on a front light sensing value of an interior rearview mirror, where the proportionality coefficient is negatively correlated with the front light sensing value;
determining a light sensing coefficient based on a rear light sensing value and the front light sensing value of the interior rearview mirror;
determining a current light sensing multiplier based on the light sensing coefficient, the proportionality coefficient and a preset precision multiplier; and
determining a target reflectance of the interior rearview mirror based on the current light sensing multiplier, and adjusting a reflectance of the interior rearview mirror based on the target reflectance,
where the front light sensing value is a light sensing value in a front direction of a vehicle, and the rear light sensing value is a light sensing value in a rear direction of the vehicle.

Based on the above objective, the present disclosure further provides an anti-glare apparatus for a rearview mirror, including: a processor configured to execute the following program modules stored in a memory:
a proportionality coefficient determination module, configured to: determine a proportionality coefficient based on a front light sensing value of an interior rearview mirror, where the proportionality coefficient is negatively correlated with the front light sensing value;
a light sensing coefficient determination module, configured to: determine a light sensing coefficient based on a rear light sensing value and the front light sensing value of the interior rearview mirror;
a current light sensing multiplier determination module, configured to: determine a current light sensing multiplier based on the light sensing coefficient, the proportionality coefficient and a preset precision multiplier; and
a reflectance adjustment module, configured to: determine a target reflectance of the interior rearview mirror based on the current light sensing multiplier, and adjust a reflectance of the interior rearview mirror based on the target reflectance;
where the front light sensing value is a light sensing value in a front direction of a vehicle, and the rear light sensing value is a light sensing value in a rear direction of the vehicle.

Based on the above objective, the present disclosure further provides an interior rearview mirror, including a memory, a processor and a computer program stored on the memory and executable on the processor, where the processor, when executing the program, performs the anti-glare method for a rearview mirror according to any one of the embodiments of the present disclosure.

Based on the above objective, the present disclosure further provides a vehicle, where the vehicle includes the interior rearview mirror according to any one of the embodiments of the present disclosure.

From the above, it can be seen that in the anti-glare method for a rearview mirror provided by the present disclosure, by determining a proportionality coefficient based on a front light sensing value of an interior rearview mirror, the ambient brightness is measured via the front light sensing value. Subsequently, a light sensing coefficient is determined based on a rear light sensing value and the front light sensing value of the interior rearview mirror, and a current light sensing multiplier is determined based on the light sensing coefficient, the proportionality coefficient and a preset precision multiplier, thereby adaptively determining the current light sensing multiplier in conjunction with ambient brightness. A target reflectance of the interior rearview mirror is determined based on the current light sensing multiplier, and a reflectance of the interior rearview mirror is adjusted based on the target reflectance, thereby adjusting the reflectance of the interior rearview mirror in conjunction with the ambient brightness, and improving the anti-glare effect and safety of the interior rearview mirror.

### BRIEF DESCRIPTION OF THE DRAWINGS

To explain the technical solutions in the present disclosure or related art more clearly, the drawings required for describing the embodiments or related art are briefly introduced below. The drawings in the following description are merely some embodiments of the present disclosure. For those of ordinary skill in the art, other drawings can be obtained based on the drawings without any creative effort.
FIG. 1 is a flowchart of an anti-glare method for a rearview mirror according to an embodiment of the present disclosure;
FIG. 2 is a flowchart of another anti-glare method for a rearview mirror according to an embodiment of the present disclosure;
FIG. 3 is a schematic structural diagram of an anti-glare apparatus for a rearview mirror according to an embodiment of the present disclosure;
FIG. 4 is a schematic structural diagram of an anti-glare system for a rearview mirror according to an embodiment of the present disclosure;
FIG. 5 is a schematic diagram of a hardware structure of an interior rearview mirror according to an embodiment of the present disclosure.

### DETAILED DESCRIPTION

To make the objectives, technical solutions, and advantages of the present disclosure clearer, the present disclosure is further described in detail below in conjunction with specific embodiments and with reference to the drawings.

It should be noted that, unless otherwise defined, the technical terms or scientific terms used in the embodiments of the present disclosure should have the usual meanings understood by those of ordinary skill in the art to which the present disclosure belongs. Words such as "first", "second", and similar terms used in the embodiments of the present disclosure do not indicate any order, quantity, or importance, but are merely used to distinguish different components. Words such as "include" or "comprise" and similar terms mean that a component or an object appearing before the word covers the component or object listed after the word and their equivalents, but do not exclude other elements or items. Words such as "connect" or "coupled" and similar terms are not limited to physical or mechanical connections, but may include electrical connections, whether direct or indirect. Words such as "upper", "lower", "left", and "right" are only used to indicate relative positional relationships. When an absolute position of a described object changes, the relative positional relationship may also change accordingly.

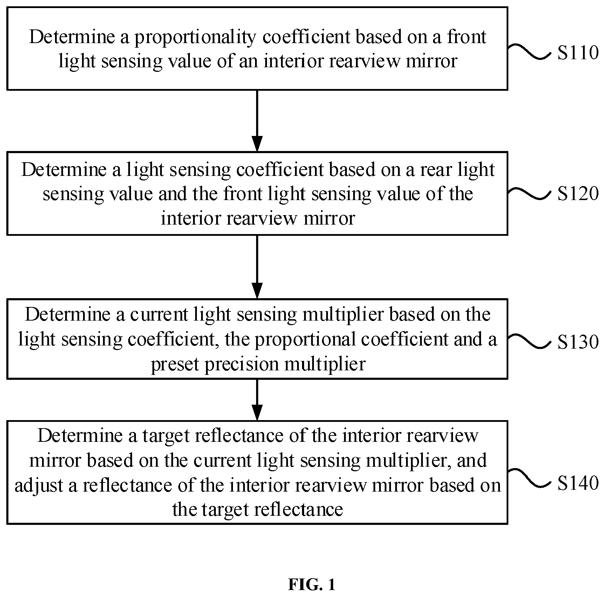

FIG. 1 is a flowchart of an anti-glare method for a rearview mirror according to an embodiment of the present disclosure, which is mainly applicable to a scenario where a reflectance of an interior rearview mirror is adjusted. As shown in FIG. 1, the method may specifically include the following steps.

In S110, a proportionality coefficient is determined based on a front light sensing value of an interior rearview mirror.

The front light sensing value is a light sensing value in a front direction of a vehicle. The front light sensing value may be a light sensing value obtained by a light sensor installed in a mirror housing direction of the interior rearview mirror. The light sensing value may be understood as light intensity. The proportionality coefficient is a ratio used to adjust a current light sensing multiplier corresponding to different front light sensing values, and the proportionality coefficient is negatively correlated with the front light sensing value.

In an embodiment, an inverse proportional calculation is performed on the front light sensing value to obtain the proportionality coefficient.

In an embodiment, the proportionality coefficient K ranges from 1 to 15 (an example value range). A relationship between K and the front light sensing value is that K being [1~15] corresponds to the front light sensing value being [0~140], K and the front light sensing value are in an inverse proportional function relationship, and the following formula applies. The converted K value is calculated as follows: K = (150 - front light sensing value) / 10.

Based on the above example, the proportionality coefficient may be determined based on the front light sensing value of the interior rearview mirror in the following way:
in response to the interior rearview mirror being in an anti-glare mode, determining an activation state of a light source corresponding to the interior rearview mirror; and in response to the activation state being inactive, determining the proportionality coefficient based on the front light sensing value of the interior rearview mirror.

The anti-glare mode is an operating mode of the interior rearview mirror. When using the anti-glare mode, the reflectance of the interior rearview mirror can be adjusted based on a light sensing condition, so that the reflectance is automatically reduced when intense light causes glare, thereby improving driving safety. In an embodiment, the interior rearview mirror further includes a streaming media mode, which uses a real scene display technology to combine a camera function with a traditional interior rearview mirror, projecting a real-time image behind the vehicle onto a mirror surface. The light source corresponding to the interior rearview mirror is a light source that affects the light sensing condition of the interior rearview mirror, such as a reading lamp installed above the interior rearview mirror. The activation state is a state indicating whether the light source is turned on, and may include active and inactive.

In an embodiment, in response to the interior rearview mirror being in the anti-glare mode, the activation state of the light source corresponding to the interior rearview mirror that may affect light sensing of the interior rearview mirror is determined, so as to adaptively adjust the reflectance of the interior rearview mirror. In response to the activation state of the light source corresponding to the interior rearview mirror being inactive, it may be determined that the light source corresponding to the interior rearview mirror does not affect the interior rearview mirror. Therefore, the proportionality coefficient may be determined based on the front light sensing value of the interior rearview mirror, and then the target reflectance of the interior rearview mirror is obtained to adjust the reflectance of the interior rearview mirror, thereby achieving an anti-glare effect.

In an embodiment, the activation state of the light source corresponding to the interior rearview mirror may be determined in response to the interior rearview mirror being in the anti-glare mode in the following way:
obtaining an operating mode of the interior rearview mirror;
in response to the interior rearview mirror being in the anti-glare mode, determining the activation state of the light source corresponding to the interior rearview mirror; and
in response to the interior rearview mirror being in the streaming media mode, returning to perform obtaining the operating mode of the interior rearview mirror until the interior rearview mirror is in the anti-glare mode.

The operating mode may be the anti-glare mode or the streaming media mode.

In an embodiment, the operating mode of the interior rearview mirror is obtained. In response to the interior rearview mirror not being in the anti-glare mode, for example, the interior rearview mirror being in the streaming media mode, the procedure exits and returns to re-obtain the operating mode of the interior rearview mirror until a step of selecting the interior rearview mirror to be in the anti-glare mode is triggered. Then, the operation of determining the activation state of the light source corresponding to the interior rearview mirror in response to the interior rearview mirror being in the anti-glare mode is performed.

In an embodiment, in response to the activation state of the light source corresponding to the interior rearview mirror being active, it is determined that the target reflectance is a first preset reflectance, and the reflectance of the interior rearview mirror is adjusted based on the target reflectance.

The first preset reflectance is the highest reflectance that the interior rearview mirror is able to achieve in the anti-glare mode.

In an embodiment, in response to the activation state of the light source corresponding to the interior rearview mirror being active, it may be determined that the light source corresponding to the interior rearview mirror would affect the display of the interior rearview mirror. Therefore, to ensure the display effect of the interior rearview mirror, the reflectance of the interior rearview mirror is adjusted to the first preset reflectance. The first preset reflectance may be understood as the highest reflectance that the interior rearview mirror is able to achieve in the anti-glare mode, such as 50%.

In S120, a light sensing coefficient is determined based on a rear light sensing value and the front light sensing value of the interior rearview mirror.

The rear light sensing value is a light sensing value in a rear direction of the vehicle. The rear light sensing value may be a light sensing value obtained by a light sensor installed in a mirror surface direction of the interior rearview mirror. The light sensing coefficient is a ratio of the rear light sensing value to the front light sensing value.

In an embodiment, a ratio of the rear light sensing value to the front light sensing value of the interior rearview mirror is taken as the light sensing coefficient.

In S130, a current light sensing multiplier is determined based on the light sensing coefficient, the proportionality coefficient and a preset precision multiplier.

The current light sensing multiplier is a numerical value used to indicate a relationship between a current front light sensing value and a current rear light sensing value. The preset precision multiplier is a preset numerical value used to adjust the precision of the current light sensing multiplier, for example, it may be 10.

In an embodiment, a product of the light sensing coefficient, the proportionality coefficient and the preset precision multiplier is determined as the current light sensing multiplier.

In an embodiment, the current light sensing multiplier may be determined based on the light sensing coefficient, the proportionality coefficient, and the preset precision multiplier in the following way:
taking a product of the light sensing coefficient and the proportionality coefficient as a reference value; and
determining a product of the reference value and the preset precision multiplier as the current light sensing multiplier.

In an embodiment, current light sensing multiplier = 10 * rear light sensing value * K * 35% / front light sensing value, where 10 is the preset precision multiplier, which is adjustable, and 35% is a preset parameter, which is adjustable.

In S140, a target reflectance of the interior rearview mirror is determined based on the current light sensing multiplier, and the reflectance of the interior rearview mirror is adjusted based on the target reflectance.

The target reflectance is a reflectance value determined based on the front light sensing value and the rear light sensing value and is used to adjust the reflectance of the interior rearview mirror.

In an embodiment, the current light sensing multiplier is processed based on a pre-established model or function indicating a relationship between the current light sensing multiplier and the target reflectance, and the target reflectance of the interior rearview mirror is obtained. Subsequently, the reflectance of the interior rearview mirror is adjusted based on the target reflectance.

In an embodiment, the method of determining the target reflectance of the interior rearview mirror based on the current light sensing multiplier may be obtaining the target reflectance by processing a preset formula or model. For example, a machine learning model is trained by taking a sample light sensing multiplier as an input and taking a sample reflectance as an output, and a model for determining the target reflectance is obtained. The method may also be determining the corresponding target reflectance based on the current light sensing multiplier, etc.

Based on the above example, the target reflectance of the interior rearview mirror may be determined based on the current light sensing multiplier in the following way:
in response to the current light sensing multiplier being less than a first multiplier, determining that the target reflectance is a first preset reflectance;
in response to the current light sensing multiplier being greater than or equal to the first multiplier and less than a second multiplier, determining, based on a preset correspondence between a light sensing multiplier and a reflectance, the target reflectance corresponding to the current light sensing multiplier; and
in response to the current light sensing multiplier being greater than or equal to the second multiplier, determining that the target reflectance is a second preset reflectance, where the first preset reflectance is greater than the second preset reflectance.

The first preset reflectance is greater than the second preset reflectance. The second preset reflectance is the lowest reflectance that the interior rearview mirror is able to achieve in the anti-glare mode. The first multiplier is a threshold value of the current light sensing multiplier and is used to determine whether the target reflectance is the first preset reflectance, and the second multiplier is a threshold value of the current light sensing multiplier and is used to determine whether the target reflectance is the second preset reflectance. The preset correspondence between a light sensing multiplier and a reflectance indicates a functional relationship between a light sensing multiplier and a reflectance.

In an embodiment, different methods for obtaining the target reflectance are determined based on relative magnitudes between the current light sensing multiplier, the first multiplier, and the second multiplier. In response to the current light sensing multiplier being less than the first multiplier, it indicates that a current requirement for anti-glare of the interior rearview mirror is relatively low, and it is determined that the target reflectance is the first preset reflectance. In response to the current light sensing multiplier being greater than or equal to the first multiplier and less than the second multiplier, it indicates that the interior rearview mirror currently needs anti-glare, and the current light sensing multiplier is input into the preset correspondence between a light sensing multiplier and a reflectance to determine the target reflectance corresponding to the current light sensing multiplier. In response to the current light sensing multiplier being greater than or equal to the second multiplier, it indicates that the current requirement for anti-glare of the interior rearview mirror is the highest, and it is determined that the target reflectance is the second preset reflectance to maximize the anti-glare function.

Based on the above example, the preset correspondence between a light sensing multiplier and a reflectance may be determined by the following way:
determining the preset correspondence between a light sensing multiplier and a reflectance based on the first multiplier, the second multiplier, the first preset reflectance and the second preset reflectance.

In an embodiment, since the first multiplier corresponds to the first preset reflectance, and the second multiplier corresponds to the second preset reflectance, the two corresponding relationships may be substituted into a preset function relationship to obtain the preset correspondence between a light sensing multiplier and a reflectance.

In an embodiment, the preset correspondence between a light sensing multiplier and a reflectance may be a preset function relationship, a preset model relationship, or a one-to-one correspondence relationship. The preset function relationship may be a linear function relationship, etc., which may be determined based on actual needs. The preset model relationship may be a convolutional neural network model relationship, etc., which may be determined based on actual needs. Whether the preset correspondence between a light sensing multiplier and a reflectance is the preset function relationship or the preset model relationship, its input is the current light sensing multiplier, and its output is the target reflectance.

In an embodiment, based on a brightness multiplier relationship obtained from a mirror surface light sensor (the rear light sensing value) and a rear housing light sensor (the front light sensing value) of the interior rearview mirror, linear adjustment is performed based on a certain algorithm, which may specifically be increase or decrease. The core of this algorithm is: the front light sensing value is taken as ambient brightness, and the lower the ambient brightness, the smaller the decrease in reflectance caused by a same brightness multiplier. The following is a specific algorithm example, where the range of parameters is variable.

First, the proportionality coefficient K ranges from 1 to 15 (an example value range). A relationship between K and the front light sensing value is that K being [1~15] corresponds to the front light sensing value being [0~140], K and the front light sensing value are in an inverse proportional function relationship, and the following formula applies. The converted K value is calculated as follows: K = (150 - front light sensing value) / 10. Further, current light sensing multiplier = 10 * rear light sensing value * K * 35% / front light sensing value, where 10 is the preset precision multiplier, which is adjustable, and 35% is a preset parameter, which is adjustable. After the current light sensing multiplier, the current light sensing multiplier is compared with a first multiplier (in this example, the first multiplier is 25, and is adjustable based on actual needs) and a second multiplier (in this example, the second multiplier is 60, and is adjustable based on actual needs) to determine the target reflectance. In case that current light sensing multiplier < 25, the target reflectance is 45% (a first preset reflectance, i.e., the maximum anti-glare rate). In case that current light sensing multiplier ≥ 60, the anti-glare function is activated, and the target reflectance is 5% (a second preset reflectance, i.e., the minimum anti-glare rate). In case that current light sensing multiplier ≥ 625 and the current light sensing multiplier < 60, based on a relationship between a reflectance parameter and the front and rear light sensing values (a preset correspondence between a light sensing multiplier and a reflectance): target reflectance = (515 - 8 * current light sensing multiplier) / 7, the target reflectance is determined. Through the above algorithm, the sensitivity of the interior rearview mirror with a reduced reflectance decreases as the ambient brightness (the front light sensing value) decreases.

Generally, when the ratio of the rear light sensing value to the front light sensing value exceeds a certain threshold, anti-glare is entered, i.e., a mirror surface reflectance of the interior rearview mirror is reduced. However, this solution has a problem that under very low ambient brightness (the front light sensing value approaches 0), a low rear light intensity would cause the ratio to be too large (exceeding a preset threshold), thereby causing erroneous entry into anti-glare. Through the above algorithm, a threshold for entering anti-glare is changed from a static parameter to a parameter that dynamically changes with the ambient brightness and changes linearly in an opposite direction. The lower the ambient brightness, the higher the threshold required for entering anti-glare. This solves the problem of erroneously entering anti-glare under low ambient brightness, i.e., solving the problem of being even more unable to see clearly due to entering an anti-glare state caused by a low light under a low light condition.

In the anti-glare method for a rearview mirror provided by this embodiment, by determining a proportionality coefficient based on a front light sensing value of an interior rearview mirror, the ambient brightness is measured via the front light sensing value. Subsequently, a light sensing coefficient is determined based on a rear light sensing value and the front light sensing value of the interior rearview mirror, and a current light sensing multiplier is determined based on the light sensing coefficient, the proportionality coefficient and a preset precision multiplier, thereby adaptively determining the current light sensing multiplier in conjunction with ambient brightness. A target reflectance of the interior rearview mirror is determined based on the current light sensing multiplier, and a reflectance of the interior rearview mirror is adjusted based on the target reflectance, thereby adjusting the reflectance of the interior rearview mirror in conjunction with the ambient brightness, and improving the anti-glare effect and safety of the interior rearview mirror.

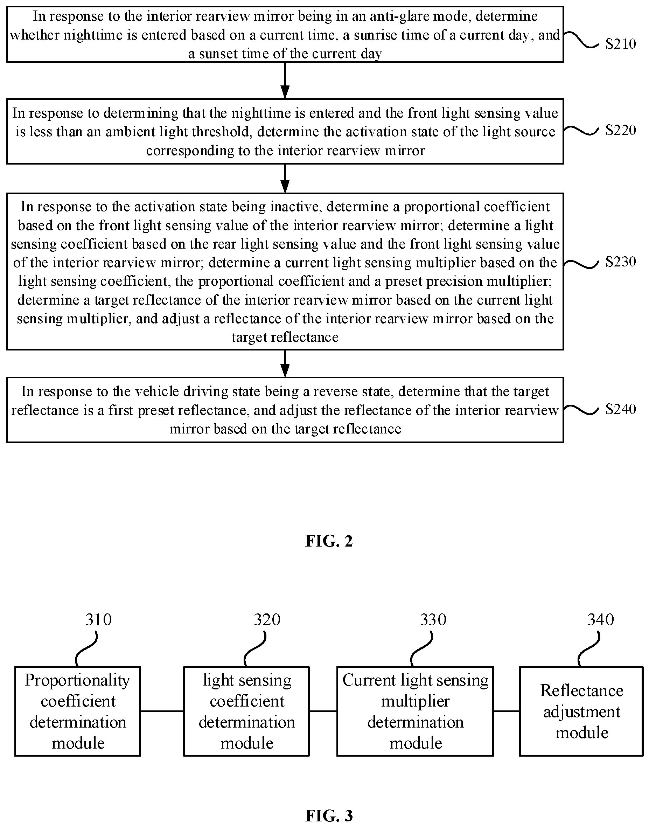

FIG. 2 is a flowchart of another anti-glare method for a rearview mirror according to an embodiment of the present disclosure. Based on the above embodiments, in an embodiment, a triggering method for triggering the step of determining a proportionality coefficient based on a front light sensing value of an interior rearview mirror is explained. The adjustment of the target reflectance when a vehicle driving state is a reverse state is added and illustrated. The explanations of terms identical or corresponding to those in the above embodiments are not repeated here. As shown in FIG. 2, the method may specifically include the following steps.

In S210, in response to the interior rearview mirror being in an anti-glare mode, whether nighttime is entered is determined based on a current time, a sunrise time of a current day, and a sunset time of the current day.

The sunrise time of the current day and the sunset time of the current day may be a sunrise time and sunset time for a current region obtained from an online weather forecast, or may be a preset seasonal empirical sunrise time and empirical sunset time.

In an embodiment, in response to the interior rearview mirror being in the anti-glare mode, whether the nighttime is entered may be determined firstly. This is because the anti-glare mode for adjusting the reflectance of the interior rearview mirror is effective at night and does not require adjustment during daytime. Accordingly, the sunrise time and sunset time of the current day are first determined, and then it is determined whether the current time is between the sunrise time of the current day and the sunset time of the current day. In response to the current time being between the sunrise time of the current day and the sunset time of the current day, it indicates that it is currently the daytime and not the nighttime; otherwise, it indicates that it is currently the nighttime, i.e., the nighttime is entered.

Based on the above example, whether the nighttime is entered may be determined based on the current time, the sunrise time of the current day, and the sunset time of the current day in the following way:
obtaining the sunrise time of the current day and the sunset time of the current day;
in response to the current time being between the sunrise time of the current day and the sunset time of the current day, determining that the nighttime is not entered; and
in response to the current time being outside the range between the sunrise time of the current day and the sunset time of the current day, determining that the nighttime is entered.

In an embodiment, based on a weather forecast of the current day, the sunrise time and the sunset time of the current day may be obtained, and then it is determined whether the current time is between the sunrise time of the current day and the sunset time of the current day. In response to the current time being between the sunrise time of the current day and the sunset time of the current day, it is determined that the nighttime is not entered; otherwise, it is determined that the nighttime is entered.

In S220, in response to determining that the nighttime is entered and the front light sensing value is less than a light sensing threshold, the activation state of the light source corresponding to the interior rearview mirror is determined.

The light sensing threshold is a preset light intensity for determining whether the ambient brightness is too low.

In an embodiment, after determining that the nighttime is entered based on time, the front light sensing value is further considered as the ambient brightness. In response to the front light sensing value being less than the light sensing threshold, it may be determined that the ambient brightness around the vehicle is low, and a condition triggering anti-glare is reached, so as to further determine the activation state of the light source corresponding to the interior rearview mirror.

Based on the above example, whether the nighttime is entered may also be determined in conjunction with an activation state of a vehicle body lamp, which may be performed after determining whether the nighttime is entered based on the current time, the sunrise time of the current day, and the sunset time of the current day:
in response to determining that the nighttime is not entered, obtaining a light signal of the vehicle body lamp, and determining whether the vehicle body lamp is turned on based on the light signal of the vehicle body lamp;
in response to the vehicle body lamp being turned on, determining that the nighttime is entered; and
in response to the vehicle body lamp being turned off, maintaining the determination that the nighttime is not entered.

The light signal of the vehicle body lamp is a signal obtained by detecting a light emitted by the vehicle body lamp, and is used to determine whether the vehicle body lamp is emitting light. The vehicle body lamp is usually turned on and emits light in a dark scene.

In an embodiment, in response to determining that the nighttime is not entered, it indicates that based on the time, the nighttime is not entered. Furthermore, it is determined whether the vehicle is in a dark scene similar to the nighttime in conjunction with the light signal of the vehicle body lamp. In response to the light signal of the vehicle body lamp being detected, it is determined that the vehicle body lamp is turned on; otherwise, it is determined that the vehicle body lamp is turned off. In response to the vehicle body lamp being turned on, it indicates that even if the nighttime is not entered based on the time, a current scene is too dark, and it may be determined that the nighttime is entered (it is not a real nighttime but a dark scene); in response to the vehicle body lamp being turned off, maintaining the determination that the nighttime is not entered.

The determination of whether to enter a night mode (i.e., the subsequent step of determining the activation state of the light source corresponding to the interior rearview mirror) may include the following two methods: (1) a cabin system, such as HUT, determines that it is a night state; and (2) the interior rearview mirror itself determines it is the night state. Both methods simultaneously determine that it is the night state, i.e., determining to enter the night mode. The night state determination of the cabin system is based on time determination or determination through other vehicle body state signals, such as whether a position light (the vehicle body lamp) is turned on. For example: whether it is the night state is determined based on the current time, the sunrise time of the current day, and the sunset time of the current day, a light signal is obtained from the vehicle body lamp, whether the vehicle body lamp is turned on is determined based on the light signal, and whether it is the night state is determined. In response to the vehicle body lamp being turned on, it is indicated that it is the night state. The night state determination of the interior rearview mirror is based on a brightness value obtained by the rear housing light sensor, i.e., the front light sensing value. In response to the front light sensing value being less than the light sensing threshold, it is determined that it is the night state.

Based on the above example, after determining whether the nighttime is entered, in response to determining that the nighttime is not entered or that the nighttime is entered and the front light sensing value is greater than or equal to the light sensing threshold, the target reflectance may be determined by the following way:
in response to determining that the nighttime is not entered, determining that the target reflectance is a first preset reflectance; and
in response to determining that the nighttime is entered and the front light sensing value is greater than or equal to the light sensing threshold, determining that the target reflectance is the first preset reflectance.

In an embodiment, in response to determining that the nighttime is not entered, it indicates that the current time is the daytime and there is no need to trigger subsequent reflectance adjustment. Therefore, it is determined that the target reflectance is the first preset reflectance, so as to adjust the reflectance of the interior rearview mirror based on the target reflectance. In response to determining that the nighttime is entered and the front light sensing value is greater than or equal to the light sensing threshold, it indicates that it is currently the nighttime but the surrounding environment is relatively bright, and there is also no need to trigger subsequent reflectance adjustment. Therefore, it is determined that the target reflectance is the first preset reflectance, so as to adjust the reflectance of the interior rearview mirror based on the target reflectance.

In S230, in response to the activation state being inactive, a proportionality coefficient is determined based on the front light sensing value of the interior rearview mirror, a light sensing coefficient is determined based on the rear light sensing value and the front light sensing value of the interior rearview mirror, a current light sensing multiplier is determined based on the light sensing coefficient, the proportionality coefficient and a preset precision multiplier, a target reflectance of the interior rearview mirror is determined based on the current light sensing multiplier, and the reflectance of the interior rearview mirror is adjusted based on the target reflectance.

In S240, in response to the vehicle driving state being a reverse state, it is determined that the target reflectance is a first preset reflectance, and the reflectance of the interior rearview mirror is adjusted based on the target reflectance.

In an embodiment, the reverse state is determined by a whole-vehicle gear system. Whether the vehicle driving state is the reverse state, i.e., a reverse gear R state, may be determined based on the whole-vehicle gear system. In response to the vehicle driving state being the reverse state, it indicates that the vehicle is currently reversing. If the reflectance of the interior rearview mirror is adjusted, it may cause an inability to clearly see a situation behind the vehicle, posing a safety hazard. Therefore, it is determined that the target reflectance is the first preset reflectance, and the reflectance of the interior rearview mirror is adjusted based on the target reflectance.

In an embodiment, the interior rearview mirror system receives a whole-vehicle gear state, which may be received via a hard wire or a CAN bus. When determining that it is in the reverse gear R state, the state of adjusting the target reflectance based on the front light sensing value and the rear light sensing value is exited, and the highest reflectance, i.e., the first preset reflectance is maintained.

In the anti-glare method for a rearview mirror provided by this embodiment, by determining whether nighttime is entered based on a current time, a sunrise time of a current day, and a sunset time of the current day, and in response to determining that the nighttime is entered and the front light sensing value is less than a light sensing threshold, the activation state of the light source corresponding to the interior rearview mirror is determined. This avoids the problem of erroneously activating the anti-glare mode and erroneously adjusting the reflectance of the interior rearview mirror when the ambient brightness is high. Furthermore, in response to the vehicle driving state being a reverse state, it is determined that the target reflectance is a first preset reflectance, and the reflectance of the interior rearview mirror is adjusted based on the target reflectance. This avoids the problem of losing the field of view due to erroneous adjustment of the reflectance of the interior rearview mirror during reversing, effectively improving the anti-glare effect and safety of the interior rearview mirror.

The method of the embodiments of the present disclosure may be executed by a single device, such as a computer or a server. The method of this embodiment may also be applied in a distributed scenario, where multiple devices cooperate with each other to complete the method. In this distributed scenario, one of the multiple devices may execute only one or more steps of the method of the embodiments of the present disclosure, and the multiple devices interact with each other to complete the method.

Some embodiments of the present disclosure are described above. Other embodiments are within the scope of the appended claims. In some cases, operations or steps recited in the claims may be performed in an order different from that in the above-described embodiments and still achieve the desired results. Additionally, the procedures depicted in the drawings are not necessarily required to be in the specific order shown or in sequential order to achieve the desired results. In certain implementations, multitasking and parallel processing are also possible or may be advantageous.

Based on the same technical concept, corresponding to the method of any of the above embodiments, the present disclosure further provides an anti-glare apparatus for a rearview mirror. FIG. 3 is a schematic structural diagram of an anti-glare apparatus for a rearview mirror according to an embodiment of the present disclosure. As shown in FIG. 3, the anti-glare apparatus for a rearview mirror includes: a processor configured to execute the following program modules stored in a memory: a proportionality coefficient determination module 310, a light sensing coefficient determination module 320, a current light sensing multiplier determination module 330, and a reflectance adjustment module 340.

The proportionality coefficient determination module 310 is configured to: determine a proportionality coefficient based on a front light sensing value of an interior rearview mirror; where the proportionality coefficient is negatively correlated with the front light sensing value. The light sensing coefficient determination module 320 is configured to: determine a light sensing coefficient based on a rear light sensing value and the front light sensing value of the interior rearview mirror. The current light sensing multiplier determination module 330 is configured to: determine a current light sensing multiplier based on the light sensing coefficient, the proportionality coefficient and a preset precision multiplier. The reflectance adjustment module 340 is configured to: determine a target reflectance of the interior rearview mirror based on the current light sensing multiplier, and adjust a reflectance of the interior rearview mirror based on the target reflectance. The front light sensing value is a light sensing value in a front direction of a vehicle, and the rear light sensing value is a light sensing value in a rear direction of the vehicle.

Based on the above example, in an embodiment, the reflectance adjustment module 340 is further configured to: in response to the current light sensing multiplier being less than a first multiplier, determine that the target reflectance is a first preset reflectance; in response to the current light sensing multiplier being greater than or equal to the first multiplier and less than a second multiplier, determine, based on a preset correspondence between a light sensing multiplier and a reflectance, the target reflectance corresponding to the current light sensing multiplier; in response to the current light sensing multiplier being greater than or equal to the second multiplier, determine that the target reflectance is a second preset reflectance, where the first preset reflectance is greater than the second preset reflectance.

Based on the above example, in an embodiment, the apparatus further includes: a correspondence determination module, configured to: determine the preset correspondence between a light sensing multiplier and a reflectance based on the first multiplier, the second multiplier, the first preset reflectance and the second preset reflectance.

Based on the above example, in an embodiment, the proportionality coefficient determination module 310 is further configured to: in response to the interior rearview mirror being in an anti-glare mode, determine an activation state of a light source corresponding to the interior rearview mirror; and in response to the activation state being inactive, determine the proportionality coefficient based on the front light sensing value of the interior rearview mirror.

Based on the above example, in an embodiment, the proportionality coefficient determination module 310 is further configured to: determine whether nighttime is entered based on a current time, a sunrise time of a current day, and a sunset time of the current day; and in response to determining that the nighttime is entered and the front light sensing value is less than a light sensing threshold, determine the activation state of the light source corresponding to the interior rearview mirror.

Based on the above example, in an embodiment, the proportionality coefficient determination module 310 is further configured to: obtain the sunrise time of the current day and the sunset time of the current day; in response to the current time being between the sunrise time of the current day and the sunset time of the current day, determine that the nighttime is not entered; and in response to the current time being outside the range between the sunrise time of the current day and the sunset time of the current day, determine that the nighttime is entered.

Based on the above example, in an embodiment, after the determining whether nighttime is entered based on a current time, a sunrise time of a current day, and a sunset time of the current day, the apparatus further includes: a secondary determination module, configured to: in response to determining that the nighttime is not entered, obtain a light signal of a vehicle body lamp, and determine whether the vehicle body lamp is turned on based on the light signal of the vehicle body lamp; in response to the vehicle body lamp being turned on, determine that the nighttime is entered; and in response to the vehicle body lamp being turned off, maintain the determination that the nighttime is not entered.

Based on the above example, in an embodiment, after determining whether nighttime is entered, the apparatus further includes: a target reflectance fixing module, configured to: in response to determining that the nighttime is not entered, determine that the target reflectance is a first preset reflectance; and in response to determining that the nighttime is entered and the front light sensing value is greater than or equal to the light sensing threshold, determine that the target reflectance is the first preset reflectance.

Based on the above example, in an embodiment, the apparatus further includes: a first preset reflectance-based adjustment module, configured to: in response to the activation state of the light source corresponding to the interior rearview mirror being active, and/or a vehicle driving state being a reverse state, determine that the target reflectance is a first preset reflectance, and adjust the reflectance of the interior rearview mirror based on the target reflectance.

Based on the above example, in an embodiment, the proportionality coefficient determination module 310 is further configured to: obtain an operating mode of the interior rearview mirror; in response to the interior rearview mirror being in the anti-glare mode, determine the activation state of the light source corresponding to the interior rearview mirror; and in response to the interior rearview mirror being in a streaming media mode, return to perform obtaining the operating mode of the interior rearview mirror until the interior rearview mirror is in the anti-glare mode.

Based on the above example, in an embodiment, the light sensing coefficient determination module 320 is further configured to: take a ratio of the rear light sensing value to the front light sensing value of the interior rearview mirror as the light sensing coefficient.

Based on the above example, in an embodiment, the current light sensing multiplier determination module 330 is configured to: take a product of the light sensing coefficient and the proportionality coefficient as a reference value; and determine a product of the reference value and the preset precision multiplier as the current light sensing multiplier.

For the convenience of description, the above apparatus is described by dividing functions into various modules. When implementing the present disclosure, the functions of each module may be implemented in one or more software and/or hardware.

The apparatus of the above embodiment is used to implement the anti-glare method for a rearview mirror corresponding to any of the above embodiments, and has the beneficial effects of the corresponding method embodiments, which are not repeated here.

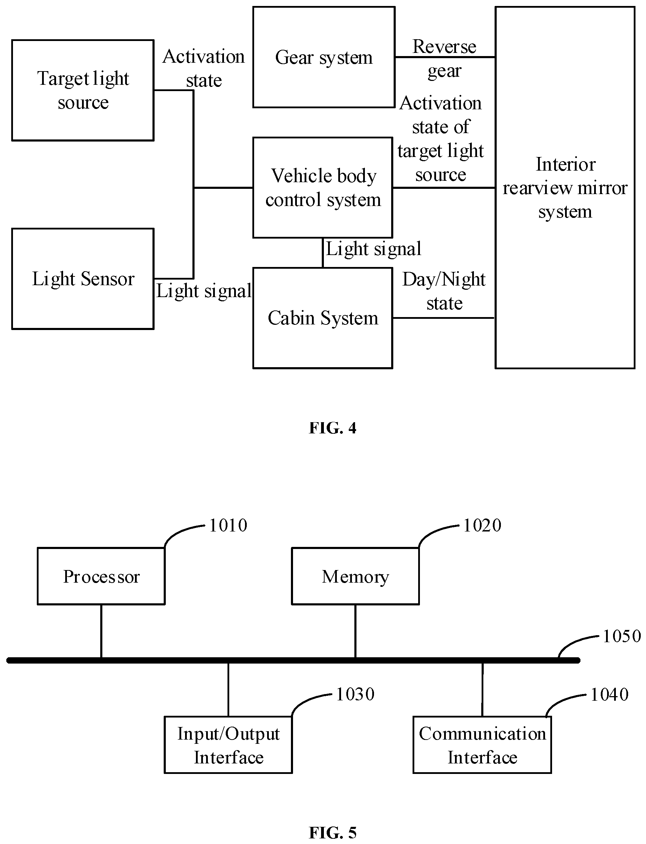

Based on the same technical concept, corresponding to the method of any of the above embodiments, the present disclosure further provides an anti-glare system for a rearview mirror. FIG. 4 is a schematic structural diagram of an anti-glare system for a rearview mirror according to an embodiment of the present disclosure. As shown in FIG. 4, the system includes: a target light source, a light sensor, a gear system, a vehicle body control system, a cabin system, and an interior rearview mirror system.

The target light source and the light sensor are respectively connected to the vehicle body control system. The target light source is a light source corresponding to the interior rearview mirror, and is configured to send an activation state to the vehicle body control system. The light sensor is configured to obtain a light signal from the vehicle body lamp and send the light signal to the vehicle body control system. The vehicle body control system is connected to the interior rearview mirror system, and is configured to send the activation state of the target light source to the interior rearview mirror system. The vehicle body control system is connected to the cabin system, and is configured to send the light signal of the vehicle body lamp to the cabin system. The cabin system determines whether nighttime is entered (i.e., day/night state) based on the light signal of the vehicle body lamp, a current time, a sunrise time of a current day, and a sunset time of the current day. Further, the cabin system is connected to the interior rearview mirror system, and is configured to send the day/night state to the interior rearview mirror system. The gear system is connected to the interior rearview mirror system, configured to send whether a reverse gear is activated to the interior rearview mirror system, so that the interior rearview mirror system determines that the target reflectance is a first preset reflectance when the vehicle driving state is a reverse state, and adjusts the reflectance of the interior rearview mirror based on the target reflectance. The interior rearview mirror system may determine a proportionality coefficient based on a front light sensing value of the interior rearview mirror; determine a light sensing coefficient based on the rear light sensing value and the front light sensing value of the interior rearview mirror; determine a current light sensing multiplier based on the light sensing coefficient, the proportionality coefficient and a preset precision multiplier; determine a target reflectance of the interior rearview mirror based on the current light sensing multiplier, and adjust the reflectance of the interior rearview mirror based on the target reflectance.

The system of the above embodiment is used to implement the anti-glare method for a rearview mirror corresponding to any of the above embodiments, and has the beneficial effects of the corresponding method embodiments, which are not repeated here.

Based on the same technical concept, corresponding to the method of any of the above embodiments, the present disclosure further provides an interior rearview mirror, including a memory, a processor, and a computer program stored on the memory and executable on the processor, where the processor, when executing the program, performs the anti-glare method for a rearview mirror according to any one of the above embodiments.

FIG. 5 shows a more specific schematic diagram of a hardware structure of an interior rearview mirror provided in this embodiment. The device may include: a processor 1010, a memory 1020, an input/output interface 1030, a communication interface 1040, and a bus 1050. The processor 1010, the memory 1020, the input/output interface 1030, and the communication interface 1040 are communicatively connected to each other within the device via the bus 1050.

The processor 1010 may be implemented by a general-purpose CPU (Central Processing Unit), a microprocessor, an Application Specific Integrated Circuit (ASIC), or one or more integrated circuits, for executing related programs to implement the technical solutions provided in the description of this specification.

The memory 1020 may be implemented in the form of ROM (Read Only Memory), RAM (Random Access Memory), static storage device, dynamic storage device, etc. The memory 1020 may store an operating system and other application programs. When the technical solutions provided in the description of this specification are implemented by software or firmware, a relevant program code is stored in the memory 1020 and is called and executed by the processor 1010.

The input/output interface 1030 is configured to connect an input/output module to achieve information input and output. The input/output module may be configured as a component in the device (not shown in the figure) or may be externally connected to the device to provide corresponding functions. The input device may include a keyboard, a mouse, a touch screen, a microphone, various sensors, etc., and the output device may include a display, a speaker, a vibrator, an indicator light, etc.

The communication interface 1040 is configured to connect a communication module (not shown in the figure) to achieve communication interaction between the device and other devices. The communication module may achieve communication via wired means (e.g., USB, network cable, etc.) or wireless means (e.g., mobile network, WIFI, Bluetooth, etc.).

The bus 1050 includes a path for transmitting information between various components of the device (e.g., the processor 1010, the memory 1020, the input/output interface 1030, and the communication interface 1040).

Although the above device only shows the processor 1010, the memory 1020, the input/output interface 1030, the communication interface 1040, and the bus 1050, in a specific implementation, the device may also include other components necessary for normal operation. In addition, those skilled in the art can understand that the above device may also include only the components necessary for implementing the solution of the description of this specification, and may not necessarily include all the components shown in the figure.

The interior rearview mirror of the above embodiment is used to implement the anti-glare method for a rearview mirror corresponding to any of the above embodiments, and has the beneficial effects of the corresponding method embodiments, which are not repeated here.

Based on the same technical concept, the present disclosure further provides a vehicle, where the vehicle includes an interior rearview mirror as described in the above embodiment.

Based on the same technical concept, corresponding to the method of any of the above embodiments, the present disclosure further provides a computer-readable storage medium storing computer instructions for causing a computer to perform the anti-glare method for a rearview mirror according to any one of the above embodiments.

The computer-readable medium of this embodiment includes permanent and non-permanent, removable and non-removable media, which can store information by any method or technology. The information may be computer-readable instructions, data structures, program modules, or other data. Examples of computer storage media include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disc read-only memory (CD-ROM), digital versatile discs (DVD) or other optical storage, magnetic cassettes, magnetic tape, magnetic disk storage or other magnetic storage devices, or any other non-transmission media that can be used to store information accessible by a computing device.

The computer instructions stored in the storage medium of the above embodiment are used to cause a computer to perform the anti-glare method for a rearview mirror according to any one of the above embodiments, and have the beneficial effects of the corresponding method embodiments, which are not repeated here.

Those of ordinary skill in the art should understand that the discussion of any of the above embodiments is exemplary only, and is not intended to imply that the scope of the present disclosure (including the claims) is limited to these examples. Under the concept of the present disclosure, the technical features in the above embodiments or different embodiments may also be combined, steps may be performed in any order, and there are many other variations in different aspects of the embodiments of the present disclosure as described above, which are not provided in detail for the sake of brevity.

In addition, to simplify the description and discussion, and to avoid making the embodiments of the present disclosure difficult to understand, well-known power/ground connections to integrated circuit (IC) chips and other components may or may not be shown in the provided figures. Furthermore, devices may be shown in block diagram form to avoid making the embodiments of the present disclosure difficult to understand, and this also takes into account the fact that the details regarding the implementation of these block diagram devices are highly dependent on the platform on which the embodiments of the present disclosure are to be implemented (i.e., these details should be fully within the understanding of those skilled in the art). Where specific details (e.g., circuits) are set forth to describe exemplary embodiments of the present disclosure, it will be apparent to those skilled in the art that the embodiments of the present disclosure may be practiced without these specific details or with variations of these specific details. Accordingly, these descriptions are to be considered illustrative and not restrictive.

Although the present disclosure has been described in conjunction with specific embodiments thereof, many alternatives, modifications, and variations of these embodiments will be apparent to those of ordinary skill in the art in light of the foregoing description. For example, other memory architectures (e.g., dynamic RAM (DRAM)) may use the discussed embodiments.

The embodiments of the present disclosure are intended to cover all such alternatives, modifications, and variations as fall within the broad scope of the appended claims. Therefore, any omission, modification, equivalent substitution, improvement, etc. made within the spirit and principle of the embodiments of the present disclosure shall be included within the scope of protection of the present disclosure.

## Claims

1. An anti-glare method for a rearview mirror, comprising:
determining a proportionality coefficient based on a front light sensing value of an interior rearview mirror, wherein the proportionality coefficient is negatively correlated with the front light sensing value;
determining a light sensing coefficient based on a rear light sensing value and the front light sensing value of the interior rearview mirror;
determining a current light sensing multiplier based on the light sensing coefficient, the proportionality coefficient and a preset precision multiplier; and
determining a target reflectance of the interior rearview mirror based on the current light sensing multiplier, and adjusting a reflectance of the interior rearview mirror based on the target reflectance,
wherein the front light sensing value is a light sensing value in a front direction of a vehicle, and the rear light sensing value is a light sensing value in a rear direction of the vehicle.

2. The method according to claim 1, wherein the determining a target reflectance of the interior rearview mirror based on the current light sensing multiplier comprises:
in response to the current light sensing multiplier being less than a first multiplier, determining that the target reflectance is a first preset reflectance;
in response to the current light sensing multiplier being greater than or equal to the first multiplier and less than a second multiplier, determining, based on a preset correspondence between a light sensing multiplier and a reflectance, the target reflectance corresponding to the current light sensing multiplier; and
in response to the current light sensing multiplier being greater than or equal to the second multiplier, determining that the target reflectance is a second preset reflectance, wherein the first preset reflectance is greater than the second preset reflectance.

3. The method according to claim 2, further comprising:
determining the preset correspondence between a light sensing multiplier and a reflectance based on the first multiplier, the second multiplier, the first preset reflectance and the second preset reflectance.

4. The method according to claim 1, wherein the determining a proportionality coefficient based on a front light sensing value of an interior rearview mirror comprises:
in response to the interior rearview mirror being in an anti-glare mode, determining an activation state of a light source corresponding to the interior rearview mirror; and
in response to the activation state being inactive, determining the proportionality coefficient based on the front light sensing value of the interior rearview mirror.

5. The method according to claim 4, wherein the determining an activation state of a light source corresponding to the interior rearview mirror comprises:
determining whether nighttime is entered based on a current time, a sunrise time of a current day, and a sunset time of the current day; and
in response to determining that the nighttime is entered and the front light sensing value is less than a light sensing threshold, determining the activation state of the light source corresponding to the interior rearview mirror.

6. The method according to claim 5, wherein the determining whether nighttime is entered based on a current time, a sunrise time of a current day, and a sunset time of the current day comprises:
obtaining the sunrise time of the current day and the sunset time of the current day;
in response to the current time being between the sunrise time of the current day and the sunset time of the current day, determining that the nighttime is not entered; and
in response to the current time being outside the range between the sunrise time of the current day and the sunset time of the current day, determining that the nighttime is entered.

7. The method according to claim 5, wherein after the determining whether nighttime is entered based on a current time, a sunrise time of a current day, and a sunset time of the current day, the method further comprises:
in response to determining that the nighttime is not entered, obtaining a light signal of a vehicle body lamp, and determining whether the vehicle body lamp is turned on based on the light signal of the vehicle body lamp;
in response to the vehicle body lamp being turned on, determining that the nighttime is entered; and
in response to the vehicle body lamp being turned off, maintaining the determination that the nighttime is not entered.

8. The method according to claim 5, wherein after the determining whether nighttime is entered, the method further comprises:
in response to determining that the nighttime is not entered, determining that the target reflectance is a first preset reflectance; and
in response to determining that the nighttime is entered and the front light sensing value is greater than or equal to the light sensing threshold, determining that the target reflectance is the first preset reflectance.

9. The method according to claim 4, further comprising:
in response to the activation state of the light source corresponding to the interior rearview mirror being active, and/or a vehicle driving state being a reverse state, determining that the target reflectance is a first preset reflectance, and adjusting the reflectance of the interior rearview mirror based on the target reflectance.

10. The method according to claim 4, wherein the in response to the interior rearview mirror being in an anti-glare mode, determining an activation state of a light source corresponding to the interior rearview mirror comprises:
obtaining an operating mode of the interior rearview mirror;
in response to the interior rearview mirror being in the anti-glare mode, determining the activation state of the light source corresponding to the interior rearview mirror; and
in response to the interior rearview mirror being in a streaming media mode, returning to perform obtaining the operating mode of the interior rearview mirror until the interior rearview mirror is in the anti-glare mode.

11. The method according to claim 1, wherein the determining a light sensing coefficient based on a rear light sensing value and the front light sensing value of the interior rearview mirror comprises:
taking a ratio of the rear light sensing value to the front light sensing value of the interior rearview mirror as the light sensing coefficient.

12. The method according to claim 1, wherein the determining a current light sensing multiplier based on the light sensing coefficient, the proportionality coefficient and a preset precision multiplier comprises:
taking a product of the light sensing coefficient and the proportionality coefficient as a reference value; and
determining a product of the reference value and the preset precision multiplier as the current light sensing multiplier.

13. An anti-glare apparatus for a rearview mirror, comprising: a processor configured to execute the following program modules stored in a memory:
a proportionality coefficient determination module, configured to: determine a proportionality coefficient based on a front light sensing value of an interior rearview mirror, wherein the proportionality coefficient is negatively correlated with the front light sensing value;
a light sensing coefficient determination module, configured to: determine a light sensing coefficient based on a rear light sensing value and the front light sensing value of the interior rearview mirror;
a current light sensing multiplier determination module, configured to: determine a current light sensing multiplier based on the light sensing coefficient, the proportionality coefficient and a preset precision multiplier; and
a reflectance adjustment module, configured to: determine a target reflectance of the interior rearview mirror based on the current light sensing multiplier, and adjust a reflectance of the interior rearview mirror based on the target reflectance,
wherein the front light sensing value is a light sensing value in a front direction of a vehicle, and the rear light sensing value is a light sensing value in a rear direction of the vehicle.

14. An interior rearview mirror, comprising a memory, a processor and a computer program stored on the memory and executable on the processor, wherein the processor, when executing the program, performs the anti-glare method for a rearview mirror according to any one of claims 1 to 12.

15. A vehicle, wherein the vehicle comprises the interior rearview mirror according to claim 14.
